(19)

Europäisches
Patentamt

European
Patent Office

Office européen
des brevets

(11) **EP 4 254 765 A1**

(12) **EUROPEAN PATENT APPLICATION**

(43) Date of publication:
**04.10.2023   Bulletin 2023/40**

(21) Application number: **22166003.8**

(22) Date of filing: **31.03.2022**

(51) International Patent Classification (IPC):
*H02M 5/293* *(2006.01)*

(52) Cooperative Patent Classification (CPC):
**H02M 5/293;** H02M 5/2573; H02M 5/2932

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Schneider Electric Industries SAS
92500 Rueil-Malmaison (FR)**

(72) Inventor: **Hanacek, Kamil
760 05 Zlin (CZ)**

(74) Representative: **Manitz Finsterwald
Patent- und Rechtsanwaltspartnerschaft mbB
Martin-Greif-Strasse 1
80336 München (DE)**

(54) **POWER CONTROL CIRCUIT**

(57)    A power control circuit comprises two terminals (11, 12) for being connected into one of a pair of power lines and a terminal (13) for being connected to the other (4) of said power lines (3, 4), a switching circuit (15) connected between the two terminal (11, 12) and comprising one or more semiconductor switches (15a, 15b), a phase angle controller (16) for controlling switching of the switching circuit (15) according to a target signal and a synchronization information determined by a synchronization information determining means (17) for determining said synchronization information and comprising a first synchronization signal rendering means (17-1) for rendering a first synchronization signal (SYNC) comprising consecutive first impulses (3di) in accordance with a voltage across said switching circuit (15), a first synchronization signal correction value determining means (17-3-1) for determining a first synchronization signal correction value by evaluating across plural consecutive first impulses (3di, 3di+1), and a synchronization information rendering means (17-3-3) configured for rendering said synchronization information in accordance with said first synchronization signal correction value.

EP 4 254 765 A1

**Description**

The invention is a power control circuit for controlling electric power supply from an electric power source to an electric load. The AC power source may be a conventional AC power grid of, for example, 110 V or 230 V with 60 Hz or 50 Hz, respectively, but may also be another kind of electric power supply, preferably AC. The power control circuit under consideration is often called a "dimmer". It may operate by phase angle control by cutting off portions of the respective half waves supplied from the source to the load.

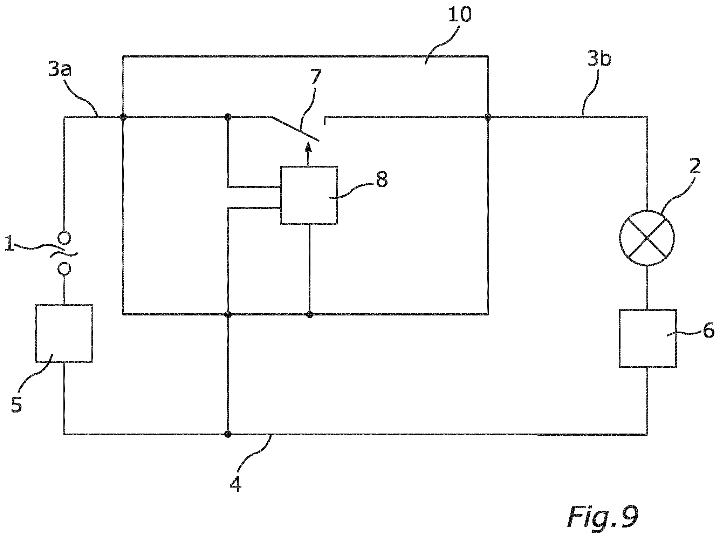

Fig. 9 shows the scenario schematically. 10 is the power control circuit. 1 is the power source, 2 is the load. The load receives the power from the power source through two power lines 3 and 4. The power control circuit 10 is connected into one of said lines, line 3 in Fig. 9, thus separated into two portions 3a and 3b, and further is connected to a tap from the other power line 4. 7 is a switching unit comprising semiconductor switches with suitable switching speed. It operates under control of a phase angle controller 8. The control regime may be leading edge control for ohmic or inductive loads or may be trailing edge control for ohmic or capacitive loads. A capacitive load here is a load with a capacitive component in its impedance Z, i.e. having $Z = R + 1/(j\omega C)$. An inductive load here is a load with an inductive component in its impedance Z, i.e. having $Z = R + j\omega L$. The circuit 10 cuts away portions of each of the half waves so that only a fraction of the maximum possible power reaches load 2.

Switching operation of the switching unit 7 in a phase angle control system must be synchronized to the phase of the AC to be controlled for obtaining useful results. Known circuits obtain their synchronization information from either observing the voltage across the switching circuit 7 when it is open (high ohmic state), or by observing the voltage between the two power lines. In accordance with such observations, timing information is obtained and control of the switching circuit 7 is made. Particularly, timing information is obtained from monitoring edges and/or zero crossings of high voltage signals so that it is known where the cycle of the power to be switched is, i.e. where the phase along the time line is. For example, the AC voltage may be monitored for falling from higher values below a relatively low threshold of, for example, +3 V or +1V, which may be taken as a zero crossing. This renders once per full cycle a timing information for the AC phase along the time line that can be used for controlling phase angle switching.

In the meantime, the power lines are sometimes also used for communicating certain information. One way of doing so is addressed as ripple control or, in German language "Rundsteuertechnik". It comprises the superposition of a switched or modulated AC voltage component on the power AC. Frequency of the superimposed AC is significantly higher than that of the power grid and may exceed 250 or 400 or 600 Hz. Its amplitude may be a fraction of the power amplitude and may be below 50 V, but above 10 or 20 V. The resulting voltage may be expressed as $U(t) = U_0*\sin(w_0*t) + U_R*\sin(\omega_R*t + \varphi)$. Uo and $\omega_0$ are the values of the power grid voltage, whereas $U_R$ and $\omega_R$ are the values of the ripple voltage. $\varphi$ is a constant phase shift. Usually, Uo » $U_R$ and $\omega_R$ >> $\omega_0$ apply.

Fig. 9 shows the situation schematically. 10 is the power control circuit. 7 is the switching circuit therein and 8 its controller. 1 is the power source, 2 is the load, symbolized as lighting. Two power lines 3 and 4 guide the power from source 1 to load 2, noting that one of them is cut open into two pieces 3a and 3b between which the power control circuit 10 and particularly its switching circuit 7 sits. The power control circuit 10 is also connected to the other power line 4. This connection scheme is called "three wire connection".

5 is a ripple control sender, and 6 is a corresponding receiver. Sender 5 is symbolized close to the power source 1, although it may be distant therefrom. It adds the mentioned ripple AC component to the original power AC. On the side of the sender, ripple AC may be switched on/off or it may be modulated (AM, FM, PWM, ...) for conveying certain information. Ripple control receiver 6 is shown, in Fig. 9, close to the load 2. But it may be remote therefrom. It may be in the power control circuit or dimmer for receiving information. It may detect presence or absence of a superimposed ripple component and/or may have a matching demodulator for detecting and possibly demodulating ripple signal qualities as input for certain activities.

The advantage of such kind of ripple control is that control information can be distributed through the power grid without requiring own wiring. However, a disadvantage is that circuits requiring precise synchronization onto the power AC, such as phase angle control for dimming, will have difficulties in finding their synchronization because the superimposed ripple AC confuses standard synchronization circuitry because the ripple renders a plurality of rising and falling edges and/or zero crossings so that detection circuits detecting rising or falling edges possibly in conjunction with thresholds get confused. This may at least translate into reduced control quality or may, worst case, lead to malfunction.

EP 2 094 065 A1 discloses a method controlling illumination means that utilizes the voltage at the semiconductor switch as synchronization input. No provisions are taken for dealing with problems coming from ripple control.

It is the object of the invention to provide a power control circuit capable of precise phase angle control also in the presence of ripple control signaling on a power line.

This object is accomplished by the features of claim 1.

Claim 1 teaches a power control circuit for controlling power supply to an electrical load that receives electrical power via two power lines from a power source. The circuit comprises a first terminal and a second terminal for being connected into one of said power lines, a third terminal for being connected to the other of said power lines and a fourth terminal for receiving a power control target signal. A switching circuit is connected with its power terminals between the first and the second terminal for controlling power supply to said electrical load and comprising one or more semiconductor switches for switching over between a high-ohmic state and a low-ohmic state between said two terminals. A phase angle controller is for controlling switching of the switching circuit according to said control target signal and a synchronization information. A synchronization information determining means is for determining said synchronization information. It comprises a first synchronization signal rendering means for rendering a first synchronization signal comprising consecutive first impulses in accordance with a voltage across said switching circuit, a first synchronization signal correction value determining means for determining a first synchronization signal correction value by sampling across plural consecutive first impulses, and a synchronization information rendering means configured for rendering said synchronization information in accordance with said first synchronization signal correction value.

Thus, the power control circuit comprises a raw first synchronization signal refined by a sampling process reaching across plural pulses or periods. This allows averaging effects on the sampled values and allows averaging-out of disturbing effects from ripple control. In this manner, control preciseness is given also in the presence of ripple control signals superimposed on the power AC.

The first synchronization signal rendering means may comprises a full wave rectification circuit for the voltage across the switching circuit, preferably rendered by body diodes of two series- and counter-connected transistors of the switching circuit and two series- and counter-connected diodes connected in parallel to the switching circuit.

When formed in this manner, the first synchronization signal is a pulse of twice the AC frequency and thus of half the period length thereof. It is good for precise control of the phase angle control switching.

The synchronization information determining means may comprise a second synchronization signal rendering means for rendering a second synchronization signal comprising consecutive second impulses in accordance with a voltage at said third terminal, and a second synchronization signal correction value determining means for determining a second synchronization signal correction value by sampling across plural consecutive second impulses. The synchronization information rendering means is further configured for rendering said synchronization information in accordance with said second synchronization signal correction value.

The second synchronization signal rendering means comprises a half-wave rectification circuit of the voltage at the third terminal against that on the first or second or a voltage derived therefrom.

In this layout, a second, qualitatively different synchronization signal is obtained that is also sampled or averaged for reducing effects from ripple control when obtained through half wave rectification. Its pulses have the same period as the underlying power AC and thus also the same frequency.

Both the first and/or the second synchronization signal correction value determining means may comprise a counter for repeatedly counting from a count start edge of a first one of said impulses to a count end edge of the consecutive pulse and correspondingly repeatedly providing a count value when experiencing the end edge. Counting may be seen as measuring the time length between counting start and counting end, e.g. defined, respectively, by impulse edges. A table may be provided for consecutively storing recent ones of the repeatedly provided count values of said counter = time measurements = sample values. Averaging means for repeatedly averaging the count values repeatedly stored in said table provide in this manner the first and/or second synchronization signal correction value in accordance with said average.

The mentioned counting is assumed to be made under a fixed and well-defined clock so that counting corresponds to time measurement. Counting may be made with a frequency much higher than that of the power AC and also higher than that of the superimposed ripple components. For example, it may have at least four or 10 or 20 times the frequency of the ripple components. It may be chosen to correspond directly to a timing unit, or may thereafter be converted into a time unit. Count frequency may be higher than 2 or 5 or 10 or 20 or 50 or 100 kHz.

The table may hold a reasonable number of recently obtained count values. For example, it may hold $2^n$ such values with n, for example, being between 5 and 8, preferably 5 or 6 or 7, i.e. holding 32 or 64 or 128 recent count values. These count values can in revolving manner be placed into consecutively following table positions, skipping back to "1" (or "0") when, for n = 6, previously "64" (or "63") has been reached. The absolute position of the count values in the table is of no relevance as an average is formed across said stored values. Said average averages out effects from the superposition of ripple components. And besides, slight changes in the power grid frequency can be detected and used for adjusting the time basis in the circuit for controlling phase angle switching.

The circuit keeps and updates either explicitly or implicitly a time basis for performing phase angle control switching. Particularly, the time basis is used as a basis or reference time for determining a switching time Ts in every half wave for rendering phase angle control. The switching time Ts is for switching the switching circuit on in leading edge control and for switching it off in trailing edge control. The time resolution and smallest used time unit for calculations and determinations may be a microsecond ($\mu$s).

The time basis may be a defined point of time $T_0$ preferably for every half wave. Conventionally, i.e. absent ripple control, it is sufficiently detectable by detecting zero crossing of the supply voltage. Relative thereto, the switching time Ts in the current half wave is determined.

Updating the time basis may be the computation of a characteristic point of time for selected or for all half waves. The characteristic point of time may be a zero crossing in undisturbed AC systems or may be, in the presence of ripple control, a virtual zero crossing To of the line voltage, called "virtual" because in the presence of ripple the real zero crossing is disturbed by said ripple and displaced against the situation without ripple and may even happen more than once for one zero crossing of the undisturbed AC. Practically, the procedure is designed to determine said virtual zero crossing To to be, on the time line, where it would be absent ripple.

Phase angle control is made for every half wave by switching the switching circuit at said switching timing Ts which is delayed by a dimming angle time daT after its virtual zero crossing timing To to have

$$(1) \qquad T_S = T_0 + daT$$

Dimming angle time daT is a fraction of the duration of the half wave, called $T_H$ here, and is determined in accordance with a power control target value. In leading edge control, the switching circuit is off during daT and is at switching timing Ts switched on. The remaining time of the half wave corresponds to the transmitted power. In trailing edge control, the switching circuit is on during daT which corresponds to the transmitted power and is at switching timing Ts switched off. To is called virtual zero crossing timing To

It is to be noted that depending on the quality of the load - ohmic or capacitive or inductive - the current waveform may be phase-shifted against the voltage waveform. When the load is ohmic, current and voltage are in phase. When the load is capacitive, current advances voltage. When the load is inductive, current lags behind voltage. In above equation (1), preferably current zero crossing timings $T_{0I}$ are used as $T_0$. Thus, a sequence of $T_{0n}$, $T_{0n+1}$, $T_{0n+2}$ ... and interlaced $T_{Sn}$, $T_{Sn+1}$, $T_{Sn+2}$ appears with the index n increasing by 1 with every half wave. Consecutive zero crossings are distant by the duration of the half wave, called $T_H$ here, which is half of the AC period length, called $T_P$ here, of the full wave of the AC with frequency $f_{AC}$, i.e. together

$$(2) \qquad T_P = 1/f_{AC} = 20 \text{ ms at 50 Hz and } 16{,}67 \text{ ms at 60Hz}$$

$$(3) \qquad T_H = T_P/2 = 10 \text{ ms at 50 Hz and } 8{,}33 \text{ ms at 60Hz}$$

$$(4) \qquad T_{0n+1} = T_{0n} + T_H$$

Particularly, above (4) may be used for calculating from a current virtual zero crossing to the succeeding one of the succeeding half wave. This may constitute the required time basis for determining the switching timing Ts.

For phase angle control, the switching timing control may be made with reference to voltage waveforms or current waveforms. For ohmic loads, they are in phase so that zero crossing timings $T_0$ of the current $T_{0I}$ and of the voltage $T_{0U}$ are the same.

For inductive loads, the current lags behind the voltage so that timings of zero-crossings of current $T_{0I}$ and of voltage $T_{0U}$ are shifted against each other by a phase shift time psT to have

$$(5) \quad T_{0I} = T_{0U} + psT \quad \text{with} \quad 0 < psT < T_P/4.$$

For capacitive loads, equation (5) applies with $0 > psT > -T_P/4$.

Combining equations (1) and (5) renders for the n-th half wave the switching timing $T_{Sn}$

$$(6) \quad T_{Sn} = T_{0Un} + psT + daT$$

In the presence of ripple control, zero crossing times cannot simply be detected. Rather, for an improved control they must be calculated under the observance of failures from ripple control as well as effects from shifting power grid frequency. Observance may mean the appropriate determination of the duration of the half wave $T_H$, of the AC period length $T_P$, of zero crossings To, $T_{0I}$, $T_{0U}$ and of the phase shift time psT.

Initiation can be made by determining, as an initial detection, immediately after connecting the circuit to the power grid or after switching it on in immediate manner a zero crossing timing and/or other characteristic timing values of one of the AC signals and using it as an initial time base for the further calculations and determinations according to above equation (4). A period duration may be determined here as the difference between two consecutive zero crossings. This is made under the assumption that superimposed ripple does not occur very often so that, correspondingly, immediate zero crossing detection and period determination is not disturbed very often by ripple so that the initial zero crossing detection is likely correct.

A phase shift time psT may be set in advance manually or may be detected by appropriate routines, such as short test switchings at very low dimming angles. Long term coherence of the zero crossing timings To and/or $T_{0U}$ timings and/or $T_{0I}$ timings computed, e.g., by above equation (4) with real waveforms may be established by providing and using a long time observer that monitors and/or evaluates suitable signals, such as one or both of the SYNC signal and the LINE_SYNC signal, across plural signal periods and determines characteristic timings such as zero-crossing timings from its monitorings and/or evaluations and compares them to computed timings. Such a long time observer would also detect an error in the above initial zero crossing detection.

In these periods, real zero crossings may be observed, and their timely deviation from computed timings may be determined and averaged. A phase shift time psT may be taken into account here. Taking the average of plural determinations averages-out the influence of ripple. In such averaging, obviously wrong values, for example time deviation values exceeding a quarter or half wave duration, may be discarded.

Such long time observance with a long time observer may be made continuously or periodically or event-driven, depending, for example, on the needed accuracy. Its results may be used for correcting the zero crossing timings once so that thereafter the computation according to equation (4) is corrected onto the real phase situation and continued from there.

The first and the second synchronization signal correction value determining means may be built in qualitatively same manner both for the first synchronization signal and for the second synchronization signal, noting, however, that these first and second synchronization signals may have different frequencies and thus period lengths of their impulse sequence so that count values may be different. Likewise, the number of stored count values in said table may be the same for both synchronization signals or may be different, as required.

For picking the right counting start and counting stop, the counter may comprise a count start/stop edge determining means including a threshold comparator for determining the start edge = count start/stop timing when the instantaneous value of said first impulse passes said threshold. Preferably, layout is such that counting stop is the corresponding edge of the subsequent pulse so that counting is made over a full impulse period. Further, layout may be such that count stop for the one impulse is also count start for the subsequent impulse.

For avoiding count confusion by additional ripple control edges, the above count start/stop edge determining means may comprise a threshold comparator enabling means that enables threshold comparison only within a time window within which the relevant edge must appear. The enabling time window may be placed, for example, in terms of time, to be less than $\pm$ 10% or $\pm$ 5% or $\pm$ 2% of the impulse cycle duration around the expected occurrence time of the next edge.

For example, the following edge of one of said impulses may be checked for dropping below a threshold, and said event may trigger count start, which may be, as already said, count end of the previous count. When, for example, the falling edge of an impulse is to be monitored, threshold monitoring for finding said edge can be started when it is known from the internal quantities, particularly the above-mentioned time base, that the edge to be monitored is approaching.

As an alternative, or in addition, to said threshold comparator enabling means count value discarding means may be provided that discard obviously wrong count values and thus exclude them from further processing.

In this manner precise information on both the cycle length $T_H$ of the first synchronization signal and the cycle length $T_P$ of the second synchronization signal is obtained and can then be used.

It is pointed out that the first and the second synchronization signal may be real analog signals appearing at certain circuit portions, whereas thereafter many or all quantities may be computational values. Threshold checks may be made on the real analog signals or may be made, after A/D conversion, in the digital realm. It is an option that first and second synchronization signals are sampled and then A/D converted for subsequent digital processing. Sampling frequency may be n times the respective impulse frequencies, with n preferably larger than 20 or 50 or 100 or 200. A quick multiplexed A/D converter may be provided for A/D converting both the first and the second synchronization signal. Particularly, it is not necessary that corrected first and second synchronization signals or some kind of count triggering impulses appear or are generated. Instead, a controller can be provided that calculates the corresponding theoretical values and operates in the digital realm up to a very late stage in procedure, for example up to finally generating control signals for the semiconductor switches. Accordingly, a real implementation of the controller may be or comprise a digital device, preferably a suitably programmed microcomputer for rendering the required determinations and the like.

In the following, embodiments of the invention will be described with reference to the drawings, in which

Fig. 1         shows a power control circuit,
Figs. 2 and 3   show signal wave forms,

Fig. 4        shows aspects of measurement and counting,

Fig. 5        shows a counting mechanism,

Fig. 6        shows a circuit for rendering a first synchronization signal,

Fig. 7        shows a circuit rendering a second synchronization signal,

Fig. 8        shows a block circuit diagram of involved components, and

Fig. 9        shows prior art.

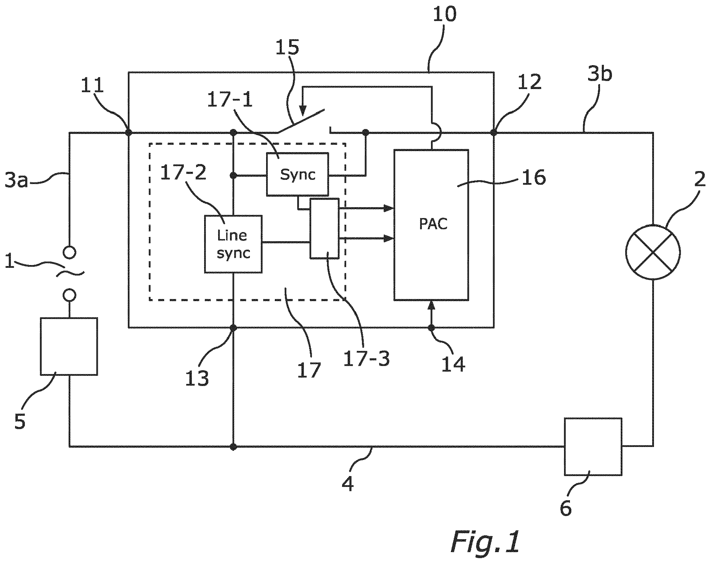

Fig. 1 corresponds in many aspects to prior art Fig. 9. 10 is the power control circuit with four terminals 11, 12, 13 and 14. With terminals 11 and 12 it is connected into one of the power supply lines 3, 3a, 3b from power source 1 to load or consumer 2. With terminal 13, it is connected to a tap from the other power line 4. 15 is a schematically shown switching circuit, comprising at least one semiconductor switch. The switching circuit 15 is switched between the terminals 11 and 12 for selectively providing high ohmic and thus blocking state or low ohmic and thus conductive state amongst them for either blocking power supply to the load or consumer 2 or allowing it.

Switching circuit 15 operates under control of a phase angle controller 16. The phase angle controller 16 outputs signals for operating the semiconductor switch or switches and thus, may output gate signals appropriate for driving the semiconductor switches. The phase angle controller 16 may be or comprise a microcomputer and may be a hybrid of analog and digital components. It may be an ASIC. It may implement functions beyond the mere phase angle control.

14 is the terminal through which the power control target value corresponding to the dimming angle is input. It may an externally accessible terminal or an internal terminal for receiving said target value from another circuit component, for example from a ripple control demodulator. The input may be a high-level signal from other high-level components and may already be digital. Or it may be some kind of analog value to be converted into the required format. The input at terminal 14 may come from a human user or may come from another automated device. As said, it may command on/off or a dimming value inbetween.

17 symbolizes a synchronization information determining means. It is shown with two components 17-1 and 17-2 for providing qualitatively different information. 17-1 operates in accordance with the voltage across the switching circuit 15. It thus preferably operates when switching circuit 15 is open at least as far as analog activities are considered. Said units 17-1 and 17-2 may at least in parts be analog circuits for rendering the mentioned first synchronization signal, called "SYNC-signal", and the second synchronization signal, called "LINE-SYNC"-signal. They may further provide the mentioned samplings and may, insofar, at least in parts be implemented by a microcomputer that jointly renders the various determinations and activities.

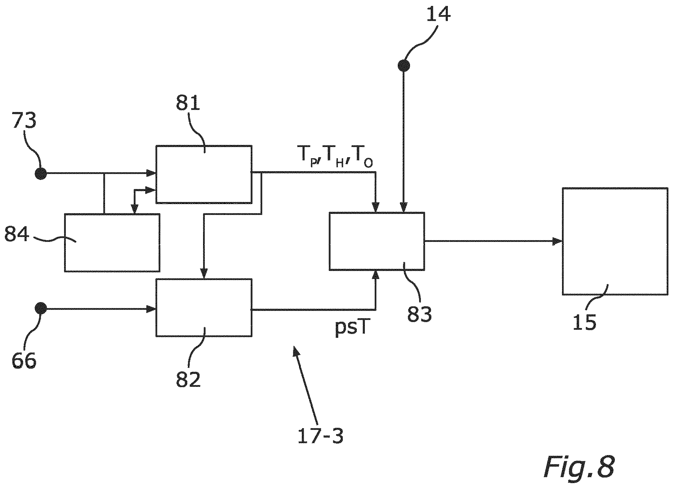

17-3 symbolizes a unit for a joint evaluation of the provided information for supplying meaningful synchronization information to the phase angle controller 16. It is shown more in detail in figure 8.

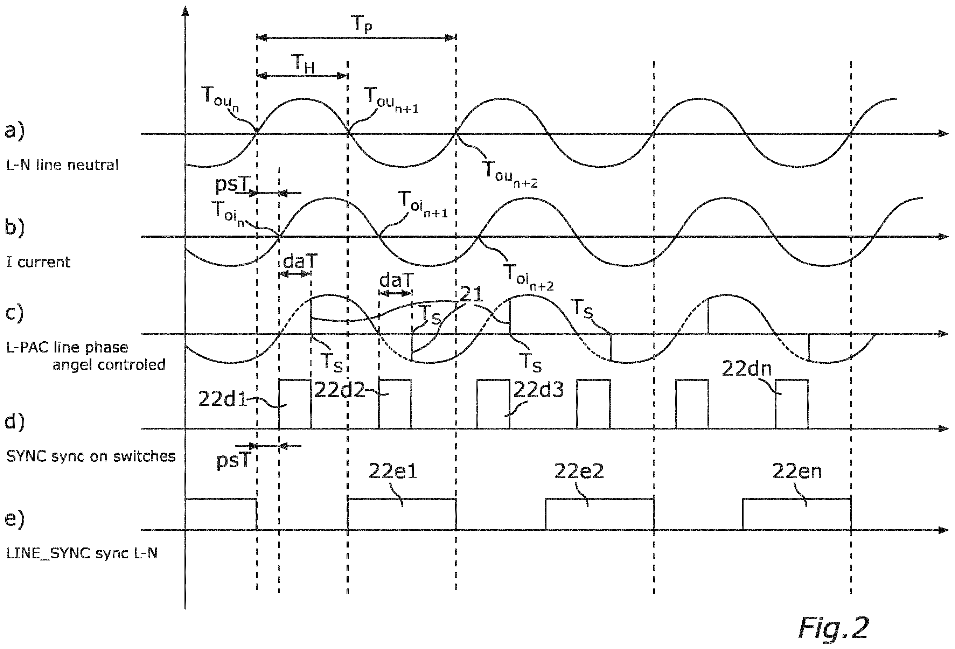

Fig. 2 show wave forms as occurring in a dimmer without superimposed ripple control signals.

Fig. 2a is the supply voltage. It is a sine wave of 50 Hz or 60 Hz in many cases. The full wave period duration is shown as $T_P$, the half wave duration is shown as $T_H$.

Fig. 2b shows a current wave form when an inductive load is fed with the voltage shown in Fig. 2a. The current is phase-delayed against the feeding voltage. It lags behind the feeding voltage by a certain phase shift time psT. It is opposite for capacitive loads. The delay time lies between 0 and a quarter of the period duration $T_P$.

Fig. 2c shows phase angle control in relation to the current wave form. Assumed is leading edge control, by switching on switches 15 after a fraction of the half wave.

Thus, leading edges 21 occur in every half wave. After switch on at edges 21, the switch is of low resistance and thus passes the power. At the same time, voltage drop across the switch 15 almost disappears except for the forward voltage of the used switches.

Fig. 2d is a SYNC signal generated in accordance with the voltage across the switching circuit 15. The signal is high when the switch is open (high ohmic state), and vice versa. A related impulse occurs for every half wave so that the SYNC impulses have a frequency twice that of the supply voltage, i.e. for example 100 Hz or 120 Hz. Their period duration is that of the half wave of the AC voltage, i.e. $T_H$. In this manner, impulses 22d1, 22d2, 22d3 ... 22dn occur.

Fig. 2e is a LINE_SYNC signal generated in accordance with the supply AC voltage. Fig. 2e shows an embodiment in which the LINE_SYNC signal is generated from a half wave rectified signal together with subsequent signal formation. Thus, impulses 22e1, 22e2 ... 22en occur of a duration of the half wave $T_H$ and of a period $T_P$ same as that of the supply AC as shown in Fig. 2a, i.e. for example .

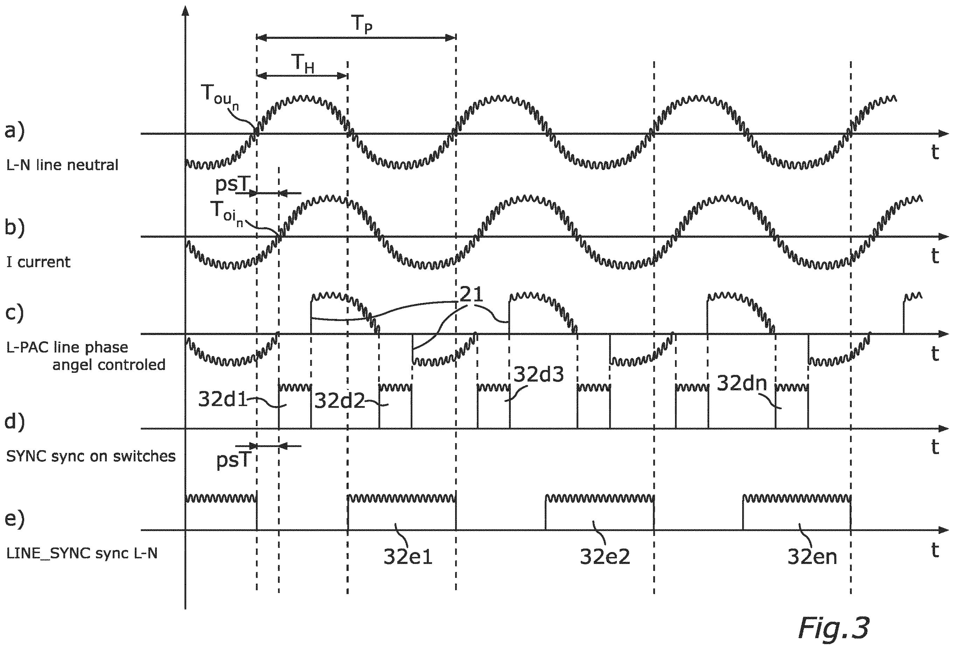

Fig. 3 shows qualitatively the same signals as Fig. 2. However, the presence of ripple control is assumed, i.e. the superposition of some kind of ripple AC on the power AC. The drawings show qualitatively that ripple frequency is higher than the power AC frequency, whereas ripple amplitude is lower than that of the power AC. It comes with the supply AC as shown in Fig. 3a and is then found on all subsequent signals of Figs. 3b, 3c, 3d and 3e corresponding to the respective ones of Fig. 1. It shows that also the SYNC signal in Fig. 3d exhibits ripple so that the respective SYNC signal impulses 32d1, 32d2, 32d3 ... 32dn are in their definition deteriorated compared to the situation in Fig. 2. The same applies for the impulses 32e1, 32e2 ...32en of the LINE_SYNC signal shown in Fig. 3e.

Generally speaking, the second synchronization signal, also called LINE_SYNC signal in this specification, is less affected by ripple signals than the SYNC signal, also called first synchronization signal, derived from the voltage across the switching circuit 15, because the former LINE_SYNC signal is not affected by additional switching activities of switching circuit 15. Thus, maintaining and updating the time basis, particularly determining virtual zero crossing timings To, $T_{0U}$, $T_{0I}$ for timing determinations is made starting from the virtual zero crossing timing determined from the second synchronization signal, i.e. the LINE_SYNC signal as shown in Fig. 3e. The first synchronization signal SYNC as shown in Fig. 3d is more affected by ripple and is thus preferably used for determining the phase shift psT between current and voltage occurring when the load has a capacitive or an inductive component. This is particularly useful or important for inductive loads because there the phase is actively switched on.

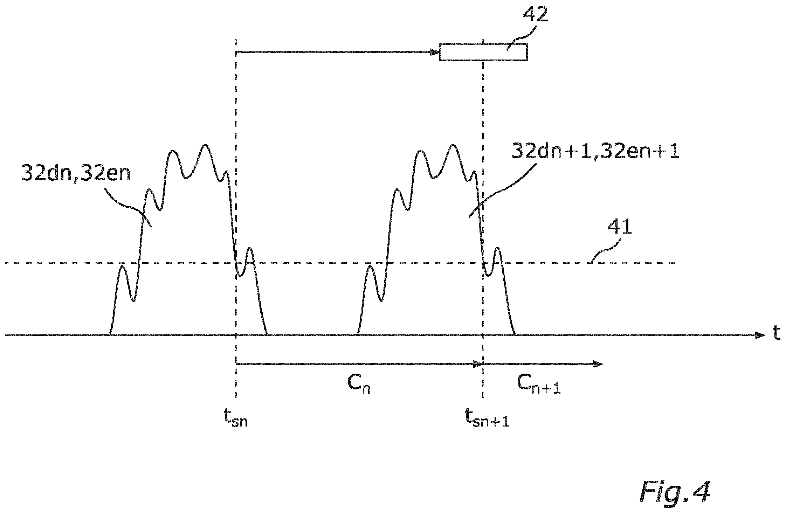

Fig. 4 shows details thereof. It shows two consecutive impulses of the SYNC signal 32dn, 32dn+1 or of the LINE_SYNC signal 32en, 32en+1. It further shows a threshold 41 that would conventionally be used for detecting an edge of interest for synchronization purposes. However, the superimposed ripple creates additional edges that would destroy the conventional edge synchronization approach. Accordingly, instead of simply detecting edges, plural subsequent impulse periods are counted for their length, and an average is formed from plural of said counts for averaging out coincidences of edge advancements or edge delays caused by the ripple. Time tsn symbolizes the start times for counting, determined in the shown example when the falling rear edge of an impulse drops below threshold 41. It is then intended to count to a corresponding portion tsn+1 of the subsequent impulse.

For avoiding confusions from too early edges caused by ripple, such as shown at 43 or 44 in Fig. 4, a time window 42 can be defined for enabling threshold checks only in said time window 42 and blanking out earlier events. As soon as a relevant event is detected within said window 42, the one impulse and time window 42 are assumed to expire, counting is stopped and a new window for the subsequent impulse is defined. Likewise, a new count is started. As already said, the time window may be placed around the expected time of the subsequent event which may be $T_P$ later or $T_H$ later than count start and may have a width of, for example, less than ±10% or ±5% or ±2% or ±1% of the related period length.

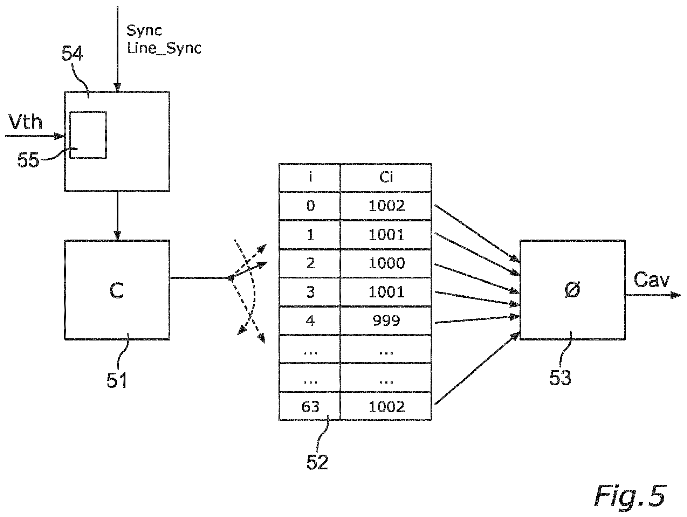

Fig. 5 shows a schematic block diagram of the mechanism used for providing a count average. 51 is the actual counter counting from count start to count end. Count start and count end is determined by a count start/stop-edge determining means 54 using a threshold compared against an edge of the impulse period to be counted. Again, it is pointed out that count stop of one count may be the count start of a subsequent count. Count frequency may be a multiple of the ripple frequency and may be higher than 2 or 5 or 10 or 20 or 50 or 100 or 200 or 500 kHz. At 100 kHz, counting a LINE_SYNC signal as shown in Fig. 2e would render, for 50 Hz AC, a count value around 2000. For a SYNC signal as shown in Fig. 2d, it would render a value around 1000. When ripple is superimposed, and thus, coincidences of edges disturb the signal, the count may change. Then, many counts are made and averaged. This is symbolized by table 52 in Fig. 5. It holds subsequent counts written into the provided positions. The number of positions may be $2^n$ with n being 5 or 6 or 7, for example. The individual counts may in revolving manner be inscribed into the related table positions starting again at the top when the bottom has been reached.

Instead of restarting a counter, a continuously counting counter may be used, and the count stop may be the time for reading out the current value and forming a difference with the preceding red-out value.

Averaging means 53 form an average on all entries in said table 52 and output an average count Cav. This count value has good changes of being very precise for the period length of the counted pulses because ripple failures tend to average out.

55 in Fig. 5 is a threshold check enabling means for implementing the threshold check time window 42 as explained with reference to Fig. 4.

As an alternative, or in addition, to threshold check enabling means 55, count discarding means may be provided for discarding out-of-range count values from being entered into the table 52. For example, it is known that dimmers may be mounted in 50 Hz or 60 Hz systems. In the example of fig. 5, this would correspond to expected ideal count values for LINE_SYNC at 50 Hz AC around 2000 and for SYNC at 50 Hz around 1000. For 60 Hz, they would be at 1666 and 833, respectively. Accordingly, seen across the different possible frequencies, reasonable count values for LINE_SYNC may be assumed in a range encompassing, with a margin, the reasonable 50 Hz and 60 Hz counts, such as a range between 1500 and 2100. Correspondingly, seen across the different possible frequencies, reasonable count values for SYNC may be assumed in a range encompassing, with a margin, the reasonable 50 Hz and 60 Hz counts, such as a range between 750 and 1100. Respective count values falling into the respective ranges may be entered into the table and then used for averaging, whereas others are not entered and do not advance the table counter counting the table position i in fig. 5.

The structure shown in Fig. 5 may be used both on the mentioned first synchronization signal SYNC and on the mentioned second synchronization signal LINE_SYNC. When their period length differs depending on how these signals are generated, also the average count value Cav finally obtained may differ, again depending on count frequency and possibly other circumstances.

Averaging in averaging means 53 can be made once every time a new value is inscribed into table 52, i.e. after each half wave, or can be made at lower frequencies, for example once every time the table has completely being filled with new values, and the existing average value Cav being used in the meantime.

The above mechanism may be used for averaging the LINE_SYNC signal period, i.e. period information obtained from the third terminal 13.. This renders a reliable value for the period duration $T_P$ or half wave duration $T_H$.

The above mechanism may also be used for averaging delays between the SYNC signal timing, i.e. timing information obtained from the third terminal 13, and the LINE_SYNC signal, i.e. timing information obtained from across the switch 15, or it may be used for averaging delays between the SYNC signal timing, i.e. timing information obtained from the third terminal 13, and a computed timing signal, such as the virtual zero crossing. This renders a reasonable good value for the phase shift time psT in case of inductive or capacitive loads.

In this manner, finally precise values on the period durations of the first synchronization signal and the second synchronization signal as shown in Figs. 3d and 3e can be obtained. They may be the above mentioned half wave period duration $T_H$ and full wave period duration $T_P$, respectively, which are otherwise difficulty to obtain.

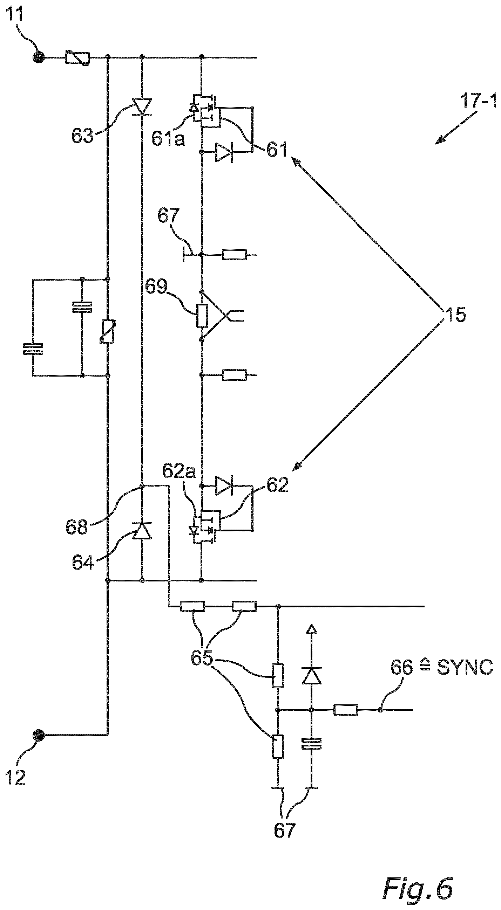

Fig. 6 shows a partial dimmer circuit and shows particularly a circuit 17-1 that may generate the first sync signal. Transistors 61 and 62 in series connection have possibly further a series connected measurement shunt 69 and are connected between terminals 11 and 12 of the overall circuit. Transistors 61 and 62 are preferably of same type and are preferably counter-connected. They have body diodes 61a and 62a, respectively, which are correspondingly counter-connected, in the embodiment of Fig. 6 anode to anode. Transistors 61 and 62 are driven jointly by phase angle controller 16 for selectively switching on or of within a half wave, depending on whether leading edge control or trading edge control is made. Also provided is a series connection of two diodes 63 and 64. They are again counter-connected, in Fig. 6 cathode to cathode. Said diode series connection is connected in parallel to the transistor series connection so that by the four diodes 61a, 62a, 63 and 64 a full wave rectifier for the voltage appearing at the switching circuit 15 is rendered. The connection point of the transistors 61, 62 and their body diodes 61a,62a provides an internal ground 67. The connection point 68 of the diodes 63 and 64 exhibits the SYNC signal that reflects the voltage across switching circuit 15 made by transistors 61, 62. A first signal shaping circuit is connected to said connecting point 68. It may comprise a first voltage dividing resistor chain 65 from which at an appropriate position the SYNC signal is tapped off and is then available at terminal 66. Due to the full wave rectification provided by diodes 61a, 62a, 63 and 64, the SYNC signal at terminal 66 has twice the frequency of the AC supply power. The first signal shaping circuit can be connected against ground 67.

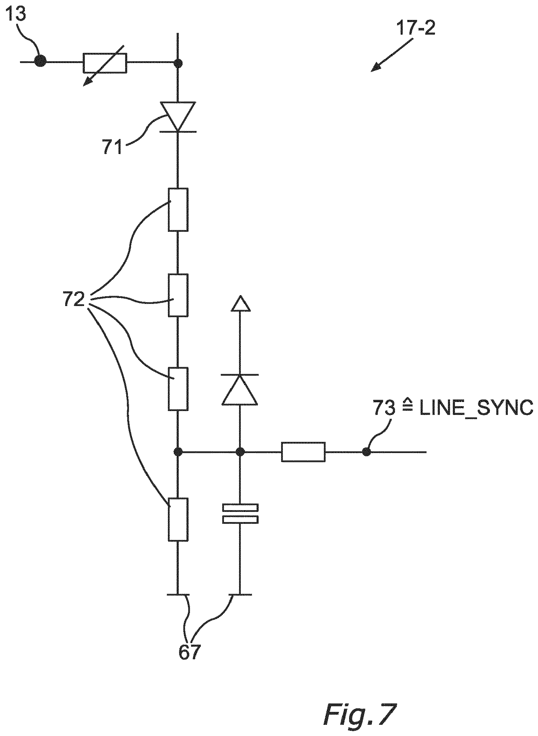

Fig. 7 shows an example of a circuit 17-2 for generating the LINE_SYNC signal, i.e. the second synchronization signal. It is again connected against internal ground 67 and to the third terminal13 connected to the not-interrupted power supply line. The circuit may be a half wave rectification and may comprise a second signal shaping circuit. Half wave rectification is provided by a diode 71. The second signal shaping circuit may comprise a second voltage dividing resistor chain 72 from which the LINE_SYNC signal is tapped off at an appropriate position and then available at terminal 73. The impulse frequency at terminal 73 is due to the half wave rectification that of the supply AC and is thus Tp.

Fig. 8 shows how signal refinement and evaluation may be made e.g. in component 17-3 of fig. 1. The mentioned LINE_SYNC signal from terminal 73 and SYNC signal from terminal 66 are fed towards components 81 and 82 and 84, respectively, implementing first the counting and averaging on each of said signals as described with reference to Fig. 5 and others for averaging out the effect of ripple control.

Components 81, 82 and 84 can operate largely in the digital realm, except perhaps for A/D conversion at their input or threshold detection signaling from monitoring threshold 41 at their input. Component 81 can further be used for continuously determining the virtual voltage zero crossing for every voltage half wave in accordance with above equation (4). Component 81 may include or implement the figure 5 mechanism for averaging the SYNC signal period, i.e. period information obtained from the third terminal 13. This renders a reliable value for the period duration $T_P$ or half wave duration $T_H$.

Component 82 can further be used for determining the virtual current zero crossing for every current half wave in analogous accordance with above equation (4) and for determining the phase shift timing psT in accordance with the obtained virtual zero crossings of current and voltage. Component 82 may include or implement the figure 5 mechanism for averaging delays between the SYNC signal timing, i.e. timing information obtained from the third terminal 13, and the LINE_SYNC signal timing, i.e. timing information obtained from across the switch 15, or for averaging delays between the SYNC signal timing, i.e. timing information obtained from the third terminal 13, and a computed timing signal, such as the virtual zero crossing. This renders a reasonable good value for the phase shift time psT in case of inductive or capacitive loads.

Component 84 may be coherence establishing means for establishing long time coherence between computed and real values. Component 84 may include or implement the figure 5 mechanism for averaging delays between the SYNC signal timing or the LINE_SYNC signal timing, i.e. real timing and a computed timing signal, such as the virtual zero crossing To, $T_{0I}$, $T_{0U}$. This renders a reasonable good value for the phase shift time psT in case of inductive or capacitive loads. Component 83 can determine the switching timing Ts for every half wave in accordance with above equation (6), noting that it receives the dimming target input from terminal 14. It can have an interface towards analog circuitry for timely generating the required gate signals for the transistors 61, 62 of switching circuit 15.

If, however, voltage zero crossing or virtual voltage zero crossing of the supply voltage is reliably known from other sources, it may be sufficient to process only the first synchronization signal, i.e. the SYNC signal, derived from values across the switching circuit 15 as mentioned above, for obtaining a measure for the phase delay between current and voltage as explained.

So far, a first synchronization signal with twice the AC power frequency was described. But it may likewise have the same frequency, for example by being generated by half wave rectification of the voltage across the switching circuit.

Initiation of the system may be made by initiation means as follows: After a detected initiation event, such as connection to power grid or power switch-on of the circuit, the circuit determines directly a zero crossing and takes it as an initial reference timing, particularly as a zero crossing time $T_0$, for phase angle control. Likewise, a predefined half wave duration such as 10 ms may be used for $T_H$ (corresponding to 20 ms for $T_P$). Here, one may also take the shorter 60 Hz period as initiation value. i.e. such as 8,33 ms for $T_H$ (corresponding to 16,66 ms for Tp).

According to described embodiments, timing and synchronization information for switching the power control circuit are obtained from half wave to half wave according to equation (4). This renders a long chain of computed timings, particularly virtual zero crossings. Then, if computed half wave duration $T_H$ does not 100 % match real duration, said computed timing chain and real timings would run apart over time. If, for example, computed half wave duration $T_H$ has an error of 0,001 %, it would mean that after less than 2 minutes the error would add up to more than 10% of the half wave duration. Then, long time coherence between these computed virtual zero crossings and real signal timing needs to be established by determining deviation and correcting it from time to time by resetting the computed chain. It may be obtained by coherence establishing means comprising a long time observer that monitors and/or evaluates real signals, such as one or both of the SYNC signal and the LINE_SYNC signal across plural signal periods in relation to computed timings, particularly said computed zero crossing timing To and/or $T_{0U}$ and/or $T_{0I}$ and determines characteristic timings such as zero-crossing timings from its monitorings and/or evaluations. Said plurality may be more than 10 or 20 or 50 or 100 periods. It may be less than 10.000 or 5.000 or 2.000 or 1.000 or 500 periods. In these periods, real zero crossings may be observed, and their timely deviation from computed timings computed with equation (4) may be determined and averaged. For said averaging, a structure as shown in figure 5 may be used. A phase shift time psT may be taken into account here, if needed. Taking the average of plural determinations averages-out the influence of ripple. Similar to what was said earlier, in such averaging, obviously wrong values, for example time deviation values exceeding a quarter or a half wave duration, may be discarded.

Such long time observance with a long time observer may be made continuously or periodically with a period of, e.g., more than 1 or 2 or 5 or 10 or 20 seconds and possibly lower than 1.000 or 500 or 2000 or 100 or 50 seconds, or event-driven, depending, for example, on the needed accuracy.

When the results of the coherence establishing means and its long time observer show that computed timings and real timings diverge to a certain amount, e.g. more than a threshold which may be a defined fraction of the half wave duration, correction means may be used for correcting the zero crossing timings once so that thereafter the computation according to equation (4) is corrected onto the real phase situation and continued from there. If, for example, such an evaluation reveals that the computed zero point is 520 $\mu$s behind, i.e. later than, the measurement average, it can be used to correct once a computed zero crossing timing $T_0$ and/or $T_{0U}$ and/or $T_{0I}$ computed by equation (4) by subtracting a correction value from the computed timing for drawing it closer to the measurement average. The correction value may be the computed deviation (520 $\mu$s in the example) itself or a fraction thereof. This mechanism would also correct initiation errors that might occur as described earlier.

However, depending on how a potential phase shift is determined, this may include establishing long time coherence between real and computed values. More in detail insofar, when phase shift timing psT is predetermined or manually set or determined by comparing the mentioned real first and second synchronization signals SYNC and LINE_SYNC, this can naturally not include time development of computed timings, particularly of computed zero crossing timing To and/or $T_{0U}$ and/or $T_{0I}$, because the latter are not included into some kind of determination. Then, the above mentioned coherence establishing means may be necessary. If, vice versa, phase shift timing psT is determined by comparing at least one of the mentioned real first and second synchronization signals SYNC and LINE_SYNC with computed timings, particularly computed zero crossing timing To and/or $T_{0U}$ and/or $T_{0I}$, particularly by averaging over a longer time time deviations amongst them, this may reveal phase shift and long term deviation in superimposed manner that could then also be used for superimposed correction of phase shift and long time deviations.

So far, averaging mechanisms for various kinds of values were described with reference to figure 5 that form the sum of available (tabulated) values and divide it by the number of summands. As an alternative to one, some or all said mechanism, an autoregressive average can be formed in accordance with the equation

$$(7)\ a = vn*w + ae*(1-w)$$

where a is the desired average, ae is an already existing average, vn is a new value to be included into said desired average and w is a predefined weighting coefficient between 0 and 1. Similar to earlier disclosure, w may be, for example, a value of $w = 2^{-n}$ (2exp(-n)) with n being a natural number, e.g. 4 or 5 or 6 or 7 or 8. With n = 7 we have w = 1/128 and 1 - w = 127/128. For initiation, a first new value vn may be set as existing average ae. Computation according to the above equation may then begin with the next new value vn. As earlier, unreasonable values of vn may be discarded and excluded from being used in the above equation. A picking policy for new values may be implemented, such as taking a new value and computing the above equation every m milliseconds, for example m being 100 or 200 or 500.

Summarizing the above, in certain embodiments

- the period duration $T_P$ can be determined from an averaging of the LINE_SYNC signal period, e.g. in unit 81,
- the phase shift duration psT can be determined from averaging a time deviation of corresponding signal portions in LINE_SYNC and in the SYNC_signal or computed values such as the virtual zero crossing $T_0$, e.g. in unit 82,
- long term coherence can be established by averaging time deviations between observed real events (such as observed real zero crossings) and corresponding computed events, e.g. in unit 84
- the virtual zero crossings can be determined in accordance with equation (4) and correcting this, when needed, in accordance with the long term coherence results.

Features described in this specification and/or in the claims and/or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Descriptions of a method or procedure or a method step or a procedural step shall be understood also as description of means for implementing the method or procedure or method step or procedural step and/or possibly also as a data carrier holding program instructions of executable code adapted for implementing the method or procedure or method step or procedural step, and vice versa.

List of reference numerals

| | |
|---|---|
| 1 | power source |
| 2 | consumer |
| 3, 3a, 3b | power supply line |
| 4 | power supply line |
| 5 | ripple control sender |
| 6 | ripple control receiver |
| 7 | conventional switching circuit |
| 8 | conventional controller |
| 10 | power control circuit |
| 11, 12, 13, 14 | first, second, third, fourth terminal |
| 15 | switching circuit |
| 16 | phase angle controller |
| 17 | synchronization information determining means |
| 21 | leading edge |
| 22d | first synchronization signal pulses |
| 22e | second synchronization signal pulses |
| 31 | leading edge |
| 32d | first synchronization signal pulses with ripple |
| 32e | second synchronization signal pulses with ripple |
| 41 | threshold value |
| 42 | threshold enabling time window |
| 43, 44 | ripple-caused edges |

| 51 | counter |
|----|---------|
| 52 | table |
| 53 | averaging means |
| 54 | count start/stop edge determining means |
| 55 | threshold check enabling means |
| 61, 62, | transistors |
| 61a, 62a | body diodes |
| 63, 64 | diodes |
| 65 | resistor chain |
| 66 | terminal |
| 67 | ground |
| 68 | connection point |
| 71 | diode |
| 72 | second resistor chain |
| 73 | terminal |
| 81 | first determination means |
| 82 | synchronization information providing means |
| 83 | second determination means |

**Claims**

1. A power control circuit (10) for controlling power supply to an electrical load (2) receiving power via two power lines (3, 4) from a power source (5), the circuit (1) comprising

   a first terminal (11) and a second terminal (12) for being connected into one (3) of said power lines (3, 4),
   a third terminal (13) for being connected to the other (4) of said power lines (3, 4),
   a fourth terminal (14) for receiving a power control target signal,
   a switching circuit (15) connected with its power terminals between the first and the second terminal (11, 12) for controlling power supply to said electrical load and comprising one or more semiconductor switches (15a, 15b) for switching over between a high-ohmic state and a low-ohmic state between said two terminals (11, 12),
   a phase angle controller (16) for controlling switching of the switching circuit (15) according to said control target signal and a synchronization information,
   a synchronization information determining means (17) for determining said synchronization information,
   **characterized in that**
   said synchronization information determining means (17) comprises
   a first synchronization signal rendering means (17-1) for rendering a first synchronization signal (SYNC) comprising consecutive first impulses (3di) in accordance with a voltage across said switching circuit (15),
   a first synchronization signal correction value determining means (82) for determining a first synchronization signal correction value by evaluating across plural consecutive first impulses (3di, 3di+1), and
   a synchronization information rendering means (17-3-3) configured for rendering said synchronization information in accordance with said first synchronization signal (SYNC) and said first synchronization signal correction value.

2. The power control circuit (10) of claim 1,
   **characterized in that**
   the first synchronization signal rendering means (17-1) comprises a full wave rectification circuit for the voltage across the switching circuit (15), preferably rendered by body diodes (61a, 62a) of two series- and counter-connected transistors (61, 62) of the switching circuit (15) and two series- and counter-connected diodes (63, 64) connected in parallel to the switching circuit and may further comprise a first signal shaping circuit preferably comprising a first voltage-dividing resistor chain (65).

3. The power control circuit (1) of claim 1 or 2,

   **characterized in that**
   said synchronization information determining means (17) comprises
   a second synchronization signal rendering means (17-2) for rendering a second synchronization signal (LINE_SYNC) comprising consecutive second impulses (3ei) in accordance with a voltage at said third terminal (13), and
a second synchronization signal correction value determining means (81) for determining a second synchronization signal correction value by sampling across plural consecutive second impulses (3ei, 3ei+1),
wherein the synchronization information rendering means (17-3-3) is further configured for rendering said synchronization information in accordance with said second synchronization signal (LINE_SYNC) and said second synchronization signal correction value.

4. The power control circuit (1) of claim 3,
**characterized in that**
the second synchronization signal rendering means (17-2) comprises a half-wave rectification circuit (71) of the voltage at the third terminal against that on the first or second or a voltage derived therefrom and may further comprise a second signal shaping circuit preferably comprising a second voltage-dividing resistor chain (72).

5. The power control circuit (10) of one of the preceding claims,

wherein the first and/or the second synchronization signal correction value determining means (17-3-1, 17-3-2) comprises
a counter (51) for repeatedly counting from a count start event, preferably a count start edge (41) of a first one of said impulses (3di, 3ei), to a count end event, preferably a count end edge (42) of the consecutive pulse (3di+1, 3ei+1), and repeatedly providing a count value (Ci, Ci+1) when experiencing the end event (42),
a table storage (52) for consecutively storing recent ones of the repeatedly provided count values (Ci) of said counter, and
averaging means (53) for repeatedly averaging the count values (Ci) stored in said table storage (52) and repeatedly providing the first and/or second synchronization signal correction value in accordance with said average.

6. The power control circuit (10) of claim 5,
wherein the counter comprises a count start/stop edge determining means (54) including a threshold comparator for determining the start edge when the instantaneous value of said first impulse passes said threshold, and optionally including a threshold check enabling means (55) for enabling said threshold comparison in a defined time window, and optionally including count value discarding means for discarding count values (Ci) out of a predetermined count range before being entered into said table storage (52).

7. The power control circuit (10) of one of the preceding claims, comprising coherence establishing means (84) comprising

a long time observer configured to evaluate across plural signal periods the timely deviation of observed real zero crossing timings from corresponding computed zero crossing timings, particularly said virtual zero crossing timing (To, $T_{0U}$, $T_{0I}$), wherein said evaluation may be an averaging of plural said timely deviations, preferably under consideration of a phase shift time (psT), and
correction means for correcting, when a result from the long time observer, particularly an average of plural said timely deviations, shows that computed timings and real timings diverge to a predetermined amount from each other, a virtual zero crossing timing (To, $T_{0U}$, $T_{0I}$) once.

8. The power control circuit (10) of one of the preceding claims, comprising means for determining a virtual zero crossing timing ($T_{0n+1}$) of a half wave in accordance with the virtual zero crossing timing ($T_{0n}$) of the preceding half wave and a half wave duration ($T_H$) according to the formula

$$T_{0n+1} = T_{0n} + T_H.$$

9. The power control circuit (10) of one of the preceding claims, comprising means for determining a dimming angle timing (daT) from a power control target value received from said fourth terminal (14), and for determining a switching circuit switching time (Ts) in accordance with a virtual zero crossing timing (To, $T_{0U}$, $T_{0I}$) and said dimming angle timing (daT), preferably in accordance with the following equation:

$$T_S = T_0 + daT$$

and preferably in accordance with a phase shift time (psT) if present and not included in said virtual zero crossing timing (To, $T_{0U}$, $T_{0I}$).

10. The power control circuit (10) of one of the preceding claims,

wherein the first and/or the second synchronization signal correction value determining means (17-3-1, 17-3-2) comprises
a counter (51) for repeatedly counting from a count start event, preferably a count start edge (41) of a first one of said impulses (3di, 3ei), to a count end event, preferably a count end edge (42) of the consecutive pulse (3di+1, 3ei+1), and repeatedly providing a count value (Ci, Ci+1) when experiencing the end event (42), autoregressive averaging means (53) for repeatedly averaging the count values (Ci) for obtaining an average according to the equation

$$ai+1 = Ci*w + ai*(1-w)$$

where ai+1 is the desired average, ai is an already existing average, Ci is a new count value to be included into said desired average and w is a predefined weighting coefficient between 0 and 1, and repeatedly providing the first and/or second synchronization signal correction value in accordance with said average (ai+1).

Fig.1

a) L-N line neutral

b) I current

c) L-PAC line phase angel controled

d) SYNC sync on switches

e) LINE_SYNC sync L-N

*Fig.2*

*Fig.3*

a)
L-N line neutral

b)
I current

c)
L-PAC line phase angel controled

d)
SYNC sync on switches

e)
LINE_SYNC sync L-N

$T_P$

$T_H$

$T_{ou_n}$

psT

$T_{oi_n}$

21

32d1  32d2  32d3  32dn

psT

32e1  32e2  32en

EP 4 254 765 A1

EP 4 254 765 A1

42

32dn,32en

32dn+1,32en+1

41

t

$C_n$

$C_{n+1}$

$t_{sn}$

$t_{sn+1}$

*Fig.4*

Fig.5

*Fig.6*

*Fig.7*

Fig.8

Fig.9

Europäisches
Patentamt

European
Patent Office

Office européen
des brevets

# EUROPEAN SEARCH REPORT

Application Number

EP 22 16 6003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 100 13 018 A1 (ABB PATENT GMBH [DE]) 20 September 2001 (2001-09-20) * figure 3 * * paragraph [0013] * | 1-10 | INV. H02M5/293 |
| X | US 2011/291735 A1 (THIRUGNANASAMBANDHAM KANTHIMATHINATHAN [IN] ET AL) 1 December 2011 (2011-12-01) * figures 2,3 * | 1 | |
| X | DE 10 2006 005289 A1 (SIEMENS AG [DE]) 30 August 2007 (2007-08-30) * figure 1 * | 1 | |
| A | WO 03/005550 A1 (LUTRON ELECTRONICS COMPAGNY IN [US]; BLACK RICHARD L [US] ET AL.) 16 January 2003 (2003-01-16) * figures 2,3 * | 1-10 | |

| | |
|---|---|
| | TECHNICAL FIELDS SEARCHED (IPC) |
| | H02M |

The present search report has been drawn up for all claims

| Place of search | Date of completion of the search | Examiner |
|---|---|---|
| The Hague | 13 September 2022 | Gotzig, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 6003

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2022

| Patent document cited in search report | | | Publication date | Patent family member(s) | | Publication date |
|---|---|---|---|---|---|---|
| DE 10013018 | A1 | | 20-09-2001 | AT | 237920 T | 15-05-2003 |
| | | | | DE | 10013018 A1 | 20-09-2001 |
| | | | | EP | 1135007 A1 | 19-09-2001 |
| | | | | ES | 2195962 T3 | 16-12-2003 |
| US 2011291735 | A1 | | 01-12-2011 | NONE | | |
| DE 102006005289 | A1 | | 30-08-2007 | DE 102006005289 A1 | | 30-08-2007 |
| | | | | EP | 1816903 A2 | 08-08-2007 |
| WO 03005550 | A1 | | 16-01-2003 | AT | 523946 T | 15-09-2011 |
| | | | | AT | 536658 T | 15-12-2011 |
| | | | | AT | 544226 T | 15-02-2012 |
| | | | | CA | 2452486 A1 | 16-01-2003 |
| | | | | CA | 2627768 A1 | 16-01-2003 |
| | | | | CA | 2627819 A1 | 16-01-2003 |
| | | | | CA | 2627848 A1 | 16-01-2003 |
| | | | | CA | 2628002 A1 | 16-01-2003 |
| | | | | CA | 2628022 A1 | 16-01-2003 |
| | | | | CN | 1524333 A | 25-08-2004 |
| | | | | CN | 101202438 A | 18-06-2008 |
| | | | | CN | 101888727 A | 17-11-2010 |
| | | | | CN | 101895212 A | 24-11-2010 |
| | | | | CN | 101895213 A | 24-11-2010 |
| | | | | CN | 101895221 A | 24-11-2010 |
| | | | | CN | 101896026 A | 24-11-2010 |
| | | | | EP | 1413041 A1 | 28-04-2004 |
| | | | | EP | 2051365 A2 | 22-04-2009 |
| | | | | EP | 2058932 A2 | 13-05-2009 |
| | | | | EP | 2073363 A1 | 24-06-2009 |
| | | | | EP | 2194637 A1 | 09-06-2010 |
| | | | | ES | 2371160 T3 | 28-12-2011 |
| | | | | HK | 1120165 A1 | 20-03-2009 |
| | | | | JP | 4303106 B2 | 29-07-2009 |
| | | | | JP | 2004535123 A | 18-11-2004 |
| | | | | JP | 2008277310 A | 13-11-2008 |
| | | | | JP | 2008277311 A | 13-11-2008 |
| | | | | JP | 2008312237 A | 25-12-2008 |
| | | | | JP | 2008312239 A | 25-12-2008 |
| | | | | JP | 2009010963 A | 15-01-2009 |
| | | | | JP | 2009076108 A | 09-04-2009 |
| | | | | KR | 20040015334 A | 18-02-2004 |
| | | | | MX | PA04000105 A | 21-05-2004 |
| | | | | SG | 153652 A1 | 29-07-2009 |
| | | | | US | 2003006710 A1 | 09-01-2003 |
| | | | | US | 2003178892 A1 | 25-09-2003 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 22 16 6003

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2022

| Patent document cited in search report | Publication date | Patent family member(s) | Publication date |
|---|---|---|---|
| | | US 2006119186 A1 | 08-06-2006 |
| | | US 2006119187 A1 | 08-06-2006 |
| | | US 2006119292 A1 | 08-06-2006 |
| | | US 2008094010 A1 | 24-04-2008 |
| | | US 2010231055 A1 | 16-09-2010 |
| | | WO 03005550 A1 | 16-01-2003 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2094065 A1